Europäisches Patentamt

(19) European Patent Office

Office européen des brevets

(11) Veröffentlichungsnummer : **0 167 754**
**B1**

(12) **EUROPÄISCHE PATENTSCHRIFT**

(51) Int. Cl.⁴ : **C 06 B 45/12**

(45) Veröffentlichungstag der Patentschrift :
27.07.88

(21) Anmeldenummer : 85105906.3

(22) Anmeldetag : 14.05.85

(54) Adhäsionsmittel zum Verbinden von Oberflächen in explosive Ladungen enthaltenden Munitionen.

(30) Priorität : 01.06.84 DE 3420544

(43) Veröffentlichungstag der Anmeldung :
15.01.86 Patentblatt 86/03

(45) Bekanntmachung des Hinweises auf die Patenterteilung : 27.07.88 Patentblatt 88/30

(84) Benannte Vertragsstaaten :
AT BE CH DE FR GB IT LI NL SE

(56) Entgegenhaltungen :
DE-A- 2 155 229
DE-A- 2 157 498
US-A- 3 054 253

(73) Patentinhaber : DIEHL GMBH & CO.
Stephanstrasse 49
D-8500 Nürnberg (DE)

(72) Erfinder : Berg, Günter
Schwarzborn-Hof
D-6696 Nonnweiler (DE)
Erfinder : Müller, Otmar
Rosenstrasse 4
D-6697 Nohfelden 1 (DE)
Erfinder : Esters, Rainer
Wichernstrasse 60
D-5650 Solingen 1 (DE)

(74) Vertreter : Hofmann, Gerhard, Dipl.-Ing., Patentassessor et al
Stephanstrasse 49
D-8500 Nürnberg (DE)

## Beschreibung

Die Erfindung bezieht sich auf ein Adhäsionsmittel zum Verbinden von Oberflächen in explosive Ladungen enthaltenden Munitionen.

Bei gegossenen Sprengladungen wird ein fester Sitz an der Innenwand des Ladungsträgers gefordert. Grundvoraussetzung dabei ist, daß das die Wandhaftung bewirkende Adhäsionsmittel sprengstoffverträglich ist.

Ein Adhäsionsmittel auf der Basis von Bitumen ist aus der DE-A-2 155 229 bekannt. Es liegt zwar die notwendige Adhäsion mit Sprengstoffen in Ladungsträgern vor, jedoch ist die Kohäsion zu niedrig. Demzufolge kann beim Abschuß des Geschosses die Schicht des Adhäsionsmittels in sich selbst reißen.

Ein bisher verwendetes — druckschriftlich nicht veröffentlichtes — Adhäsionsmittel ist auf der Basis von Alkyd-Harzen aufgebaut. Es enthält eine Beimischung von TNT. Die als Binder verwendeten Alkyd-Harze sind luft- bzw. sauerstoffhärtend. An Geschoßhüllen aufgetragen wurde ein derartiges Adhäsionsmittel durch Lagerung immer härter, so daß nach einer bestimmten Trocknungszeit oder Lagerzeit ein Anlösen des Adhäsionsmittels durch Sprengstoff beim Gießen immer schwieriger wird, was nur durch höhere Vorwärmtemperatur der Geschoßhülle vor dem Gießen teilweise kompensiert werden kann. Hier sind jedoch Grenzen gesetzt. Ist nämlich die Hüllentemperatur höher als die Schmelztemperatur des Sprengstoffes, so werden beim Gießen von TNT die als Keimbildner benötigten TNT-Kristalle in der Schmelze wieder aufgeschmolzen, was zu « grobkristallinem Gefüge » führt, insbesondere in der Randzone.

Beim Gießen von « Composition B » wird die Erstarrung des TNT verzögert, was eine erhöhte Sedimentation des Hexogens verursacht. Beide Wirkungen sind nicht zulässig.

Weiterhin ist die Adhäsion dieses Adhäsionsmittels sehr niedrig und die Kohäsin sehr hoch. Nachteilig ist dadurch, daß der eingegossene Sprengstoff nicht in dem erforderlichen Maße das Adhäsionsmittel anlöst und im Falle der Anwendung bei Geschoßladungen dieses in der Grenzschicht zum Sprengstoff hin reißt.

Bei den Adhäsionsmitteln ist der Nachteil gemeinsam, daß die in die Ge-Geschoßhülle gegossene Sprengladung während der Abkühlungsphase sich vom Geschoßboden abheben und damit ein Bodenspalt vorliegen kann. Bei solchen Geschoßladungen reicht die bestehende Wandhaftung zur Vermeidung der Relativbewegung der Sprengladung gegenüber der Geschoßhülle beim Abschuß des Geschosses nicht aus. Die Sprengladung schlägt daher unter adiabatischer Verdichtung von ca. 200 °C am Geschoßboden auf. Dies führt zur Selbstzündung der Sprengladung im Waffenrohr.

Für Adhäsionsmittel zur Verbindung von Oberflächen in explosive Ladungen enthaltenden Munitionen ist neben guten Adhäsions- und Kohäsionseigenschaften auch die rationelle Verarbeitungsmöglichkeit zu fordern.

Die Aufgabe der Erfindung besteht daher darin, ein Adhäsionsmittel vorzuschlagen, das bezüglich seiner Adhäsions- und Kohäsionseigenschaften einen festen Sitz von explosiven Ladungen in Geschoßhüllen bei Vermeidung eines Bodenpaltes in einem rationell durchführbaren Fertigungsverfahren gewährleistet. Auch ist sicherzustellen, daß Sprengstoffstücke, die mit dem Adhäsionsmittel miteinander verbunden sind, bei Beschleunigungen nicht in der Schichtdicke des Adhäsionsmittels voneinander zu trennen sind.

Die Lösung der Erfindung ist den kennzeichnenden Merkmalen des Anspruches 1 zu entnehmen. Vorteilhafte Weiterbildungen der Erfindung sind in den Unteransprüchen angegeben.

Nach der Erfindung liegt nach der Applikation und der physikalischen Trocknung ein für alle Sprengstoffe geeignetes Adhäsionsmittel vor, dessen Adhäsionskräfte zum jeweiligen Untergrund, wie Metall, Sprengstoff, größer sind als die beim Wiedererstarren auftretenden Kontraktionskräfte des Sprengstoffes. Seine Bruchdehnung ist gleich groß oder größer als die des Sprengstoffes. Bei Geschossen liegt eine Wandhaftung vor, die auch bei hoher Beschleunigungen in der Hauptachse und in Drallrichtung in den metallischen Hüllen einen festen Sitz der Sprengladung bei Vermeidung eines Bodenspaltes gewährleistet.

Wesentlich für die Erfindung ist das dem Sprengstoff angeglichene Schmelzintervall der Bindemittelkombination. Die geschmolzenen Phasen solvatieren einander, wodurch eine innige Verzahnung der wieder erstarrten Phasen erzielt wird. Die Pigmentkompositionverhindert das Ablaufen des Lacküberzuges beim Erwärmen der Hüllen auf Gießtemperatur, so daß ein rationelles Fertigungsverfahren bei gleichbleibender Qualität der Wandhaftung möglich ist.

Eine ausgezeichnete Wandhaftung von gegossenen Sprengladungen an Geschoßhüllen wird bei einer Trockenschichtdicke von $\geq 30$ µm erreicht.

Bei miteinander zu verbindendem Stückguß und Formguß ist eine ausgezeichnete Verbindung unmittelbar nach dem Herstellen der Sprengstoffstücke durch Pressen beschichteter Sprengstoffkörper zu erzielen. Die Trockenschicht beträgt 100 bis 200 µm, sofern mit statischem Preßdruck gearbeitet wird. Mit ansteigendem Preßdruck kann die Trockenschichtdicke kleiner gewählt werden, um die sichere verbindung zu erreichen.

Aufgrund der Erfindung ist die Munition bezüglich der Wandhaftung des Sprengstoffes nicht mehr, wie bisher üblich, das schwächste Glied in der Kette eines Waffensystems. Dies ist dadurch zu belegen, daß beim Ausdrücken einer Sprengladung aus einer Geschoßhülle die Schicht des Adhäsionsmittels einschließlich einer daran anhaftenden Schicht aus Sprengstoff unversehrt erhalten bleibt, jedoch das Gefüge des Sprengstoffes reißt. Dadurch ist es bei Wafffengattungen, wie der Artillerie möglich, in einem erweiterten Einsatzbereich ohne Gefährdung des Bedienungspersonals oder des Materials tätig zu werden. Die Munition wiedersteht nämlich wesentlich höheren Beschleunigungen, so daß die Feuergeschwindigkeit durch rascheres Ansetzen und Abbremsen des Geschosses im Patronenlager als auch die Anzahl der Ladungen wesentlich steigerbar ist. Die Gefahr von ladungsspezifischen Rohrkrepierern ist mit der Erfindung beseitigt.

Transportprobleme durch Stoßbeanspruchungen sind dadurch ebenfalls beseitigt, so daß die Munitionsverpackungen relativ einfach aufgebaut sein können.

Die Haftung des Adhäsionsmittels an der Geschoßwand ist ausgezeichnet. Die Haftwerte liegen weit über der jeweiligen Sprengstoff-Scherfestigkeit. Das Adhäsionsmittel haftet sowohl an der galvanisch- als auch an der kaltphosphatierten Geschoßwand. Auch an der blanken, unvergüteten Geschoßwand liegen die erforderlichen Haftungswerte vor. Damit eignet sich das Adhäsionsmittel auch für alle metallischen, Sprengstoff enthaltenden Gehäuse, wie für Gefechtsköpfe Schneidladungen, Minen, Handgranaten und ähnliches.

**Patentansprüche**

1. Adhäsionsmittel zum Verbinden von Oberflächen in explosive Ladungen enthaltenden Munitionen, dadurch gekennzeichnet, daß es besteht aus,

a) 14 bis 46 Gew- % eines in Sauerstoff nichthärtenden Bindeharzes mit einem Erweichungspunkt unterhalb des Schmelzpunktes des Sprengstoffes ;

b) 6 bis 26 Gew- % einer Pigmentkomposition ;

c) 24 bis 66 Gew- % einer polymeren Lösungsmittelkomposition, wobei das Bindeharz sich zusammensetzt aus

12 bis 30 Gew- % eines Mischpolymerisates aus ca.

75 % Vinylchlorid und ca.

25 % Vinylmonomeren, wie Vinylbutyläther,

1 bis 8 Gew- % ölfreien Polyester und

1 bis 8 Gew- % eines epoximodifizierten Triglyzerides.

2. Adhäsionsmittel nach Anspruch 1, gekennzeichnet durch die Zusammensetzung der Pigmentierung aus

1 bis 3 Gew % Farbruß als färbende und Deckfähigkeit erzeugende Komponente

5 bis 20 Gew % Magnesium-Aluminium-Silicat zur Verbesserung der Metallhaftung und

0,1 bis 3 Gew % Quellton gegen Absetzen.

3. Adhäsionsmittel nach Anspruch 1, gekennzeichnet durch die Zusammensetzung des Lösemittels aus

20 bis 40 Gew % Aromatischen Kohlenstoffen

1 bis 10 Gew % Aliphatischen Kohlenstoffen

1 bis 8 Gew % Alkoholen und

2 bis 8 Gew % Ester.

4. Adhäsionsmittel nach Anspruch 1, dadurch gekennzeichnet, daß es besteht aus

30 % PVC-Mischpolymerisat

3 % ölfreier Polyester

30 % Xylol

7 % epoximodifiziertes Triglycerid

0,5 % Bentone

1,5 % Flammruß

5 % Ethylglykol

13 % Talcum

5 % Butylacetat

5 % Testbenzin.

**Claims**

1. An adhesive for connecting surfaces in munitions containing explosive charges, characterised in that it consists of :

a) 14 to 46 % by weight of a binding resin non-hardening in oxygen with a softening point below the melting point of the explosive ;

b) 6 to 26 % by weight of a pigment composition ;

c) 24 to 66 % by weight of a polymeric solvent composition, in which respect the binding resin is composed of

12 to 30 % by weight of a mixed polymer consisting of about

75 % vinyl chloride and about

25 % vinyl monomers, such as vinyl butyl ether,

1 % to 8 % by weight of oil-free polyester and

1 to 8 % by weight of an epoximodified triglyceride.

2. An adhesive according to Claim 1, characterised by the composition from

1 to 3 % by weight of lamp-black carbon as colouring and obscuring-power-producing component

5 to 20 % by weight of magnesium-aluminium-silicate to improve the metal adhesion and

0.1 to 3 % by weight of swelling clay against settling.

3. An adhesive according to Claim 1, characterised by the composition of the solvent from

20 to 40 % by weight of aromatic carbons

1 to 10 % by weight of aliphatic carbons

1 to 8 % by weight of alcohols and

2 to 8 % by weight of esters.

4. An adhesive according to Claim 1, characterised in that it consists of

30 % PVC mixed polymer

3 % oil-free polyester

30 % xylene

7 % epoximodified triglyceride

0.5 % bentonite

1.5 % lamp-black

5 % ethyl glycol

13 % talcum

5 % butyl acetate

5 % white spirit.

## Revendications

1. Agent adhésif pour la jonction de surfaces dans des munitions contenant des charges explosives, caractérisé en ce qu'il se compose de :

a) 14 à 46 % en poids d'une résine de liaison présentant un point de ramollissement inférieur au point de fusion de l'explosif ;

b) 6 à 26 % en poids d'un mélange de pigments ;

c) de 24 à 66 % en poids d'un mélange de solvants polymères, où la résine de liaison se compose de :

12 à 30 % en poids d'un mélange de polymères d'environ

75 % de chlorure de vinyle et

25 % de monomères vinyliques tels que le vinyl-butyl-éther,

1 à 8 % en poids d'un polyester exempt d'huile,

1 à 8 % en poids d'un triglycéride à modification époxy.

2. Agent adhésif selon la revendication 1, caractérisé par la composition de pigmentation se composant de :

1 à 3 % en poids de suie colorée en tant que composant colorant et agent de couverture,

5 à 20 % en poids d'un silicate d'aluminium et de magnésium pour l'amélioration de l'adhésivité sur les métaux et,

0,1 à 3 % d'argile expansible contre la décantation.

3. Agent adhésif selon la revendication 1, caractérisé en ce que la composition de solvants se compose de :

20 à 40 % en poids de carbures aromatiques,

1 à 10 % en poids de carbures aliphatiques,

1 à 8 % en poids d'alcools et,

2 à 8 % en poids d'esters.

4. Agent adhésif selon la revendication 1, caractérisé en ce qu'il est composé de :

30 % d'un mélange de polymères PVC,

3 % d'un polyester exempt d'huile,

30 % de xylène,

7 % d'un triglycéride à modification époxy, 0,5 % de bentonite,

1,5 % de noir de fumée,

5 % d'éthyl glycol,

13 % de talc,

5 % d'acétate de butyle,

5 % de benzène pour analyse.